# EUROPEAN PATENT APPLICATION

(11) **EP 1 223 518 A2**
(43) Date of publication of application: **17.07.2002**
(21) Application number: 01309714.2
(22) Date of filing: 16.11.2001
(51) Int. Cl.: G06F 17/30

(54) **Information communicating system having web document close-up function, close-up method thereof, and recording medium for recording the close-up method**

(30) Priority: 16.01.2001 KR 2001002426
(71) Applicant: SAMSUNG ELECTRONICS CO., LTD., Suwon-City, Kyungki-do (KR)
(72) Inventor: Lee, Haw-Kyung, Kangnam-gu, Seoul (KR)
(74) Representative: Robinson, Ian Michael

(57) **Abstract**

An information communicating system (30) is provided, having a close-up function on a web document, a close-up method thereof and a recording medium recording the close-up method. The information communicating system (30) is coupled to a web server (50) via a network (40) and is arranged to download a web document from the web server, wherein the web document is of a frame structure. When one frame (14) is selected from the frame structure of the web document, the information communicating apparatus displays a close-up of the selected frame of the web document. Accordingly, since a particular part of the web document of the frame structure can be selectively focused and displayed, a readability of the document is improved on low resolution devices.

## Description

The present invention relates in general to a method of displaying a web document, and more particularly, to an information communication system for displaying a web document that has a plurality of frames displayed, wherein the system improves readability of the web document on a low-resolution output device. The invention also relates to a recording medium for recording the method.

Generally, a web browser downloads a web document written in, for example, Hyper Text Mark-up Language (HTML) and generates a plurality of windows representing text and image according to the structure of the document.

The window and document contained in the window are collectively defined as a frame. In a given frame, the document and the window operate independently from other frames.

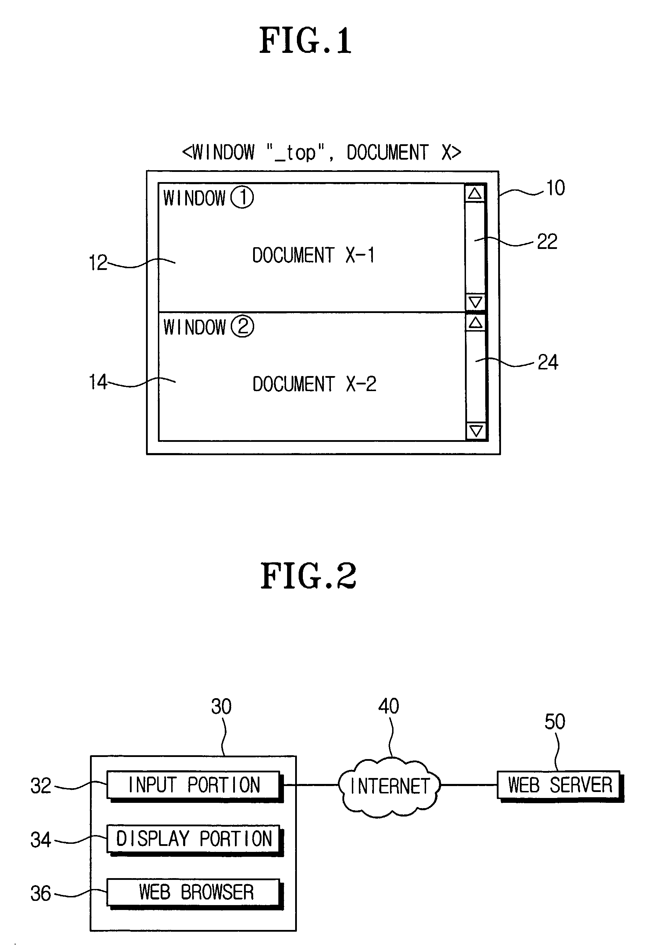

Figure 1 displays an example of a web document having a general frame structure. A screen 10 displays a document X on a root window (_top). The document X includes two frames 12, 14 that respectively have window (1) and document X-1, and window (2) and document X-2.

While the web browser is actively in use, the root window (_top) is displayed on the screen 10. Further, the respective frames 12, 14 have user interfaces (e.g., scroll bars 22, 24), that enable a user to view the whole area of the document, inclusive of the area that is hidden due to size discrepancy.

Recently, as the interest in the web has grown, computers and various types of web browser embedded devices have been developed. For example, web browser embedded digital TVs, Personal Digital Assistant (PDA) devices, mobile phones and web screen phones have been developed.

However, these systems have various problems and disadvantages. For example, but not by way of limitation, since most web documents are designed for a display on a computer, when a web document having a plurality of frames is displayed in the devices smaller than the computer display (i.e., monitor), the web document is divided into the plurality of frames, and the displayed portion is too small to read correctly.

Another problem is that when using the devices of lower resolution than the computer display, the frames of the displayed web document cannot be distinguished correctly.

The present invention aims to overcome or at least reduce the various problems and disadvantages of the related art. It is an aim of the present invention to provide an information communication system, method and recording medium for recording the method that reduces screen complexity, and increases a document readability.

According to a first aspect of the present invention there is provided an information communicating system coupleable to a web server via a network, comprising: an information communicating apparatus arranged to download a web document from a web server, wherein when the web document has a frame structure and when a frame is selected from the frame structure, the information communicating apparatus displays a close-up of the selected frame.

Preferably, the information communicating apparatus comprises a display portion that displays the web document; an input portion that receives a request for a close-up on a particular frame when the web document comprises a plurality of frames; and a web browser that provides a close-up screen of the particular frame and displays the close-up screen in the display portion.

Preferably, the web browser provides a plurality of menus that process the web document, and the web browser provides a close-up of the downloaded web document when a selection of the menus for a close-up of the web document is received at the input portion.

Preferably, the web browser includes a voice recognition function, and provides a close-up of the downloaded document in accordance with a voice command requesting the close-up of the web document is received at the input portion.

Preferably, the web browser provides a close-up of the downloaded web document when a selection is made through at least one particular key of the input portion.

According to a second aspect of the present invention there is provided a method for displaying a web document using an information communicating apparatus having a web browser, the method comprising the steps of: A) displaying a web document in an initial window that is generated when the web browser is driven; and B) when the web document is comprised of a plurality of frames of windows and documents and when a signal for a close-up of a document of a frame is selected, displaying the selected document in close-up.

The method preferably further comprises the steps of i) when the close-up document comprises a plurality of sub-frames having windows and documents, selecting a signal for a close-up of a particular document from a plurality of documents of the sub-frames; and ii) displaying the selected particular document in close-up.

Preferably, when the web document includes a plurality of first sub frames that have a plurality of second sub-frames, and when a signal for close-up of a particular document of documents of the second sub-frames is selected, the step B) displays the selected particular document in close-up.

Preferably, the step B) comprises the steps of: b1) when the close-up document is displayed containing an anchor that designates a particular document and a particular window, selecting the anchor; and b2) displaying the particular document designated by the anchor according to a characteristic of the anchor.

In one embodiment the step b2) displays the designated document while maintaining the close-up.

In another embodiment the step b2) displays the designated document in the window designated by the anchor, while maintaining the close-up.

In a third embodiment the step b2) displays the designated document in the window designated by the anchor, while cancelling the close-up.

According to a third aspect of the present invention a recording medium that stores a program configured to perform a close-up of a web document, and that uses an information communicating apparatus having a web browser, the stored program performing the steps of: displaying a web document in an initial window that is generated when the web browser is driven; and when the web document is comprised of a plurality of frames, and a signal for a close-up of the web document for one of the frames is selected, displaying the selected frame in close-up.

For a better understanding of the invention, and to show how embodiments of the same may be carried into effect, reference will now be made, by way of example, to the accompanying diagrammatic drawings in which:
Figure 1 is a view showing one example of a web document having a general frame structure;
Figure 2 is a view showing a construction of an information communicating system having a close-up function for the web document in accordance with the preferred embodiment of the present invention;
Figure 3 is a flowchart of a close-up method for the web document in accordance with the preferred embodiment of the present invention;
Figure 4 is a view showing a screen showing a close-up of the web document of the general frame structure in accordance with the preferred embodiment of the present invention;
Figure 5 is a view showing one example of the web document of the general frame architecture having a sub-frame structure in accordance with another preferred embodiment of the present invention;
Figure 6 is a view showing a tree structure of a window of the web document of Figure 5;
Figure 7 is a view showing a close-up of the sub-frame of the web document of Figure 5;
Figure 8 is a view showing another example of a screen containing a close-up of the sub-frame of the web document of Figure 5;
Figure 9 is a flowchart of a close-up process when an anchor of the close-up screen is selected according to the preferred embodiment of the present invention;
Figure 10 is a view showing one example of screen variation when the anchor of the close-up screen is selected;
Figure 11 is a view showing another example of screen variation when the anchor of the close-up screen is selected;
Figure 12 is a view showing yet another example of screen variation when the anchor of the close-up screen is selected;
Figure 13 is a view showing yet another example of screen variation when the anchor of the close-up screen is selected;
Figure 14 is a view showing yet another example of screen variation when the anchor of the close-up screen is selected; and
Figure 15 is a view showing yet another example of screen variation when the anchor of the close-up screen is selected.

The preferred embodiments of the present invention will now be described with reference to the accompanying drawings. In the present invention, the "frame" is defined as a combination of a window and document contained in a window. However, the terms "frame" and "window" may be used interchangeably.

Figure 2 shows the construction of an information communicating system having a function of web document close-up in accordance with the preferred embodiment of the present invention. An information communication apparatus 30 is connected to a web server 50 via the Internet 40. The information communication apparatus 30 (e.g., an internet TV, PDA, mobile phone or web screen phone) includes an input device 32, a display device 34, and a web browser 36. The input device 32 (e.g., mouse, pen, keyboard, keypad, and voice recognition device) is for selecting a document that the user wants to view in greater detail and with improved readability. Here, a close-up view of the desired document is provided for the user.

Preferably, a key on the keyboard performs a close-up command with respect to the web document. Alternatively, the input device 32 may include a voice recognition unit for inputting voice command therethrough. The input device 32 may also select a close-up release process by the same method that selects the close-up process.

The display device 34 displays the web document downloaded, and the web browser 36 accesses the web and downloads the web document. When the downloaded web document has a plurality of frames and the signal for close-up process is selected for one frame of the plurality of the frames, the selected frame is output to the display device 34 in a close-up mode (i.e. magnified or zoomed-in mode).

Preferably, the web browser 36 provides a close-up display of the desired web document on receipt of input of a particular key or a plurality of predetermined keys of the keyboard. Alternatively, the web browser may close-up the web document on receipt of a voice command through the input device 32.

Alternatively, the web browser 36 may provide a plurality of menus for processing the web document. When the command for close-up is selected by the input device 32 from one of the menus, the web browser 36 closes-up the web document downloaded.

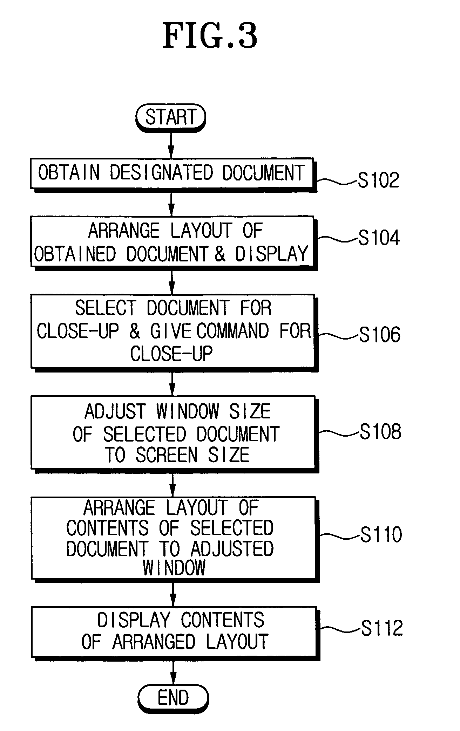

Figure 3 illustrates a close-up method using the information communication apparatus having the close-up function according to the preferred embodiment of the present invention. First, a user accesses the web server 50 and obtains desired information (e.g., a designated document) by using the information communication apparatus 30 (step S102). Next, the obtained document is laid out and displayed on the information communication apparatus 30 (step S104). When a particular document intended for close-up is selected and commanded (step S106), the size of the window containing the particular document is adjusted to the screen size (step S108). Then, contents of the particular document are laid out according to the adjusted window (step S110), and the laid out contents are displayed on the screen (step S112).

A description of close-up processing on the web document by the close-up method in accordance with the preferred embodiment of the present invention follows, with reference to the screens being displayed during the processes.

As noted above, the related art system illustrated in Figure 1 includes the web document X of Figure 1, which includes two frames 12, 14 which respectively have a window (1) and a document X-1, and a window (2) and a document X-2.

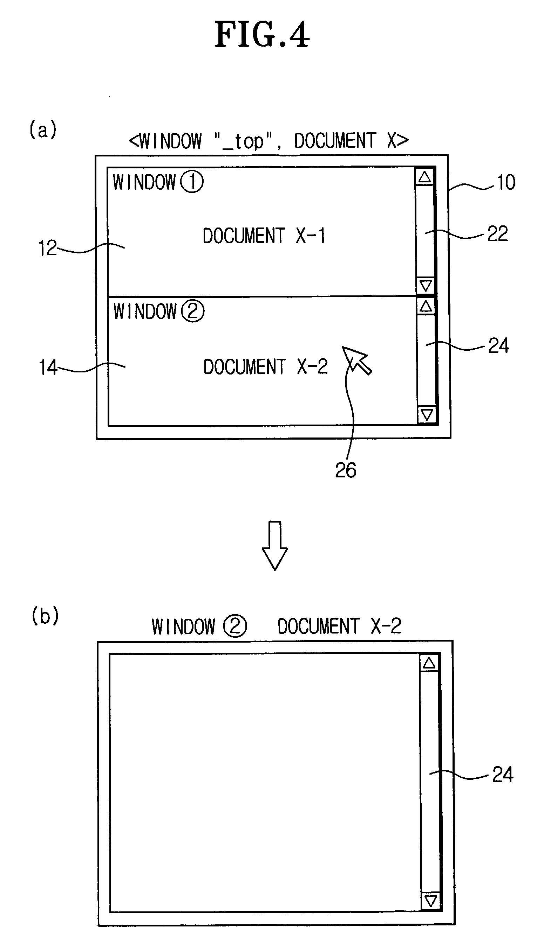

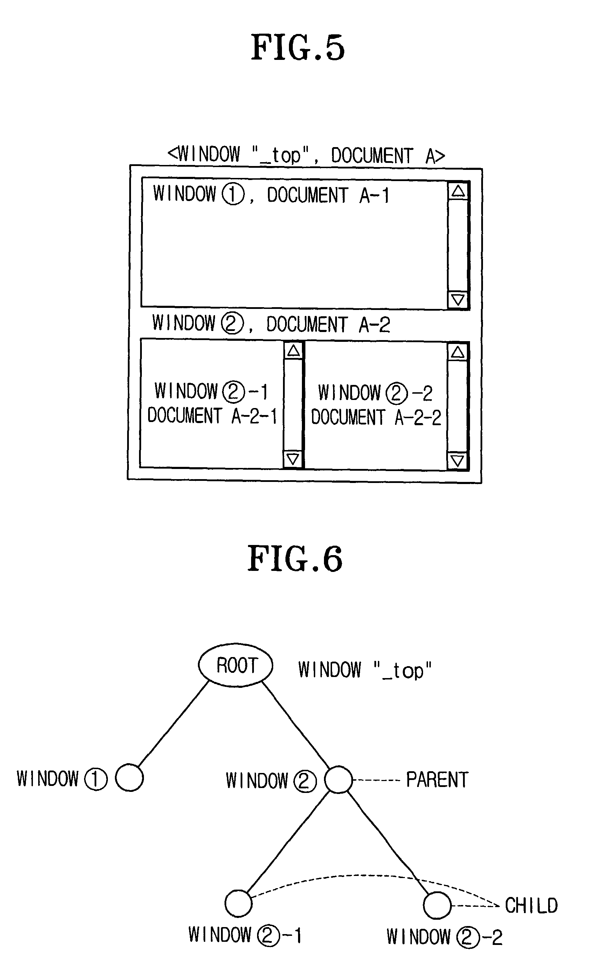

In Figures 4(a), 4(b) and 5, reference is made to the similar features illustrated in Figure 1, and a description of those reference characters is omitted. An arrow 26 in Figure 4(a) indicates that the document is selected.

When the user selects a particular document X-2 for close-up as illustrated in Figure 4(a), the window (2) and the document X-2 are magnified and displayed as illustrated in Figure 4(b). As illustrated in Figure 4(b), other documents except for the close-up document are not displayed on the screen. However, the content of the document is maintained in the browser.

Further, during the close-up process, if the frame should be laid out according to the window size, the document is displayed after the layout. The user may select whether to do the layout or not.

As illustrated in Figure 5, the web document A includes two upper frames that respectively have a window (1) and a document A-1, and a window (2) and a document A-2. The window (2) also includes two sub-frames that respectively have a window (2)-1 and a document A-2-1 and a window (2)-2 and a document A-2-2.

As shown in Figure 6, the web document A has a tree structure, in which the window (2) is a parent window of the child windows (2)-1 and (2)-2.

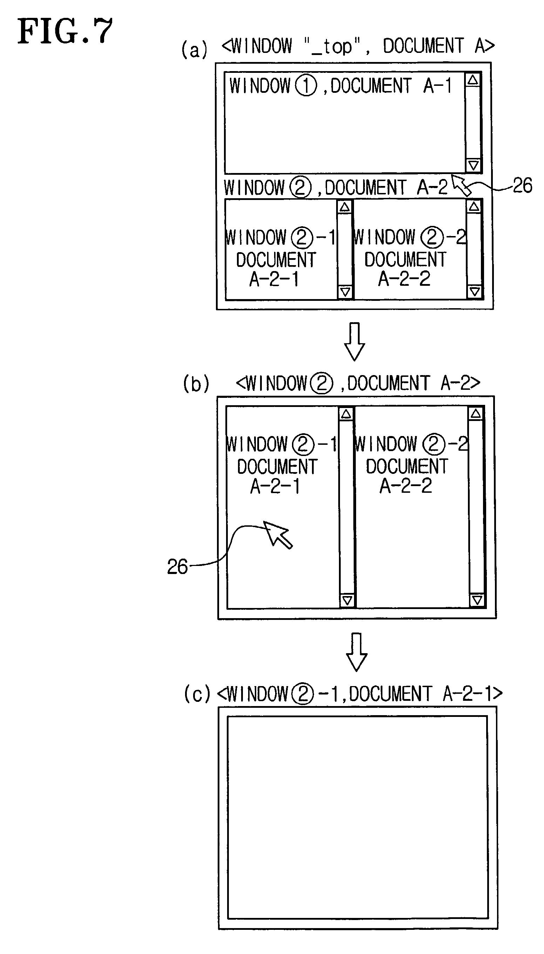

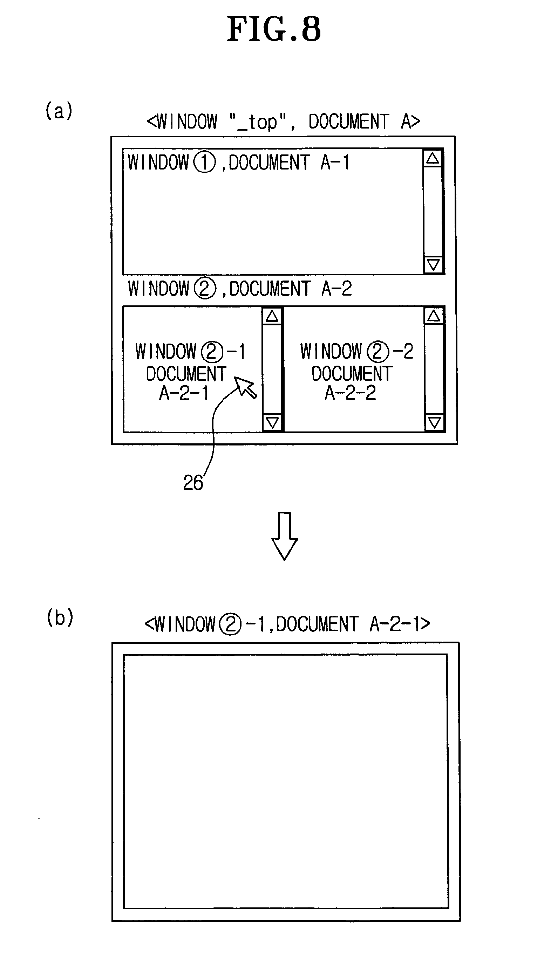

The close-up method of the web document of Figure 5 can be implemented according to the methods described below. First, as shown in Figure 7(a), the document A-2, which is an upper document of the document A-2-1, is selected with the arrow 26. Accordingly, the closed-up document A-2 is displayed in the screen as illustrated in Figure 7(b) and the close-up document is displayed as illustrated in Figure 7(c) when selected with the arrow 26. In a second method, the document A-2-1 of Figure 8(a) is directly selected with the arrow 26, and the document A-2-1 is magnified and displayed in a single step as illustrated in Figure 8(b).

Alternatively, if the close-up document contains an anchor, the user can obtain another web document by selecting the anchor. The anchor in the Markup Language means that a document linked to the document is being displayed. Accordingly, by selecting the anchor, the document designated by the anchor is downloaded. Further, the anchor designates as a target window a window for the linked document.

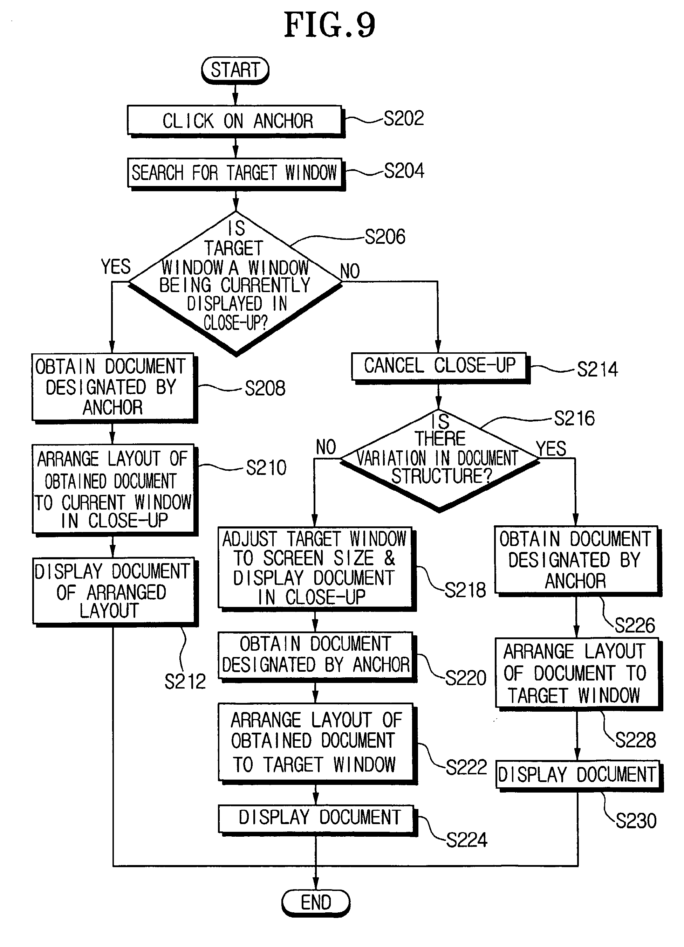

Figure 9 is a flowchart of the close-up process when the anchor of the close-up screen is selected. When the user clicks on the anchor of the close-up document (step S202), the target window designated by the anchor is searched (step S204). Next, it is determined whether the target window is the window currently displayed in the close-up view or not (step S206).

If the target window is the current window, the document designated by the anchor is downloaded (step S208). Then, the downloaded document has a layout arranged in the current window in close-up (step S210), and the downloaded document is laid out according to the current close-up window that is being displayed (step S212).

If the current window in close-up is not designated as the target window of the anchor, the close-up is cancelled (step S214). In step S214, the cancelling of the close-up may either be displayed on the screen for user notice, or operated within the information communication apparatus.

After cancelling the close-up, it is determined whether the target window has a different document structure (step S216). The target window has a different document structure when the anchor has designated as the target window is the parent window (2) of the window (2)-1 being currently displayed in close-up, or the root window (_top) of all the windows, or the window having child windows (i.e., the intermediate window of the tree structure).

If it is determined that the target window of the anchor has a varied structure in step S216, the document designated by the anchor is downloaded (step S226). Then, the downloaded document is laid out in accordance with the target window (step S228), and the document is displayed (step S230).

If the target window of the anchor has no variation in document structure, the close-up of the target window is adjusted to the size of the screen and displayed in the screen (step S218). Then, the document designated by the anchor is downloaded (step S220). When the document is downloaded, the document is laid out in accordance with the target window (step S222) and displayed on the target window (step S224).

If there is no target window designated by the anchor, the document designated by the anchor can be displayed by clicking on the anchor in the current window that is displayed in close-up. Accordingly, when the document has different structure, the document is displayed in the target window without a close-up view of the target window.

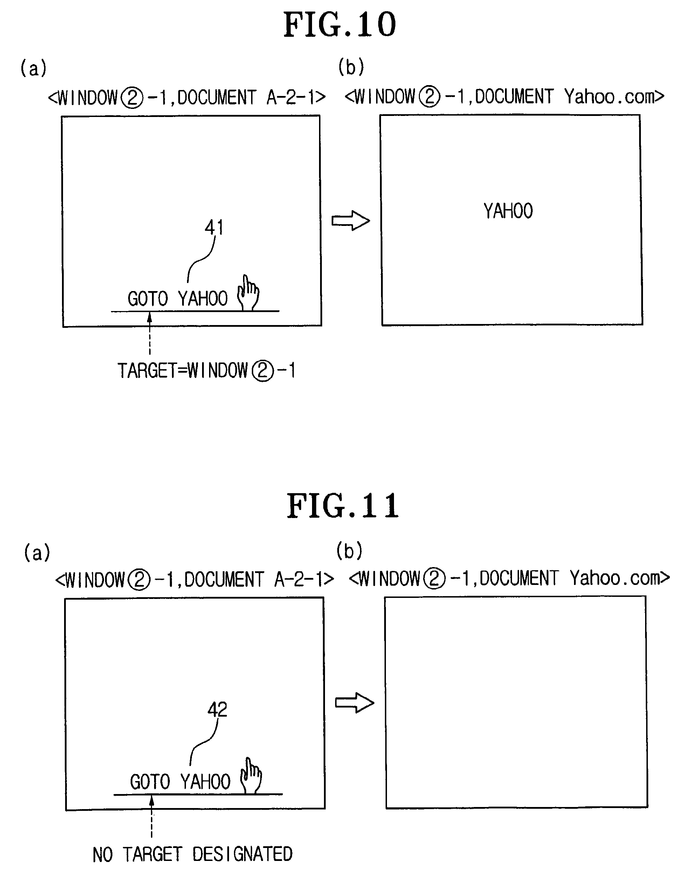

Figure 10 shows the screen variation in case of selecting an anchor that designates the current window in close-up as the target window, corresponding to steps S208-S212. Figure 10(a) shows the close-up screen of the document A-2-1 and the window (2)-1, containing an anchor 41 that has contents of <A target="window (2)-1" href= "http://www.yahoo.com"/> Goto Yahoo</A>, with the current closed-up window being designated as the target window. Accordingly, if the anchor 41 is selected, the document (i.e., yahoo.com) of the anchor 41 is magnified and displayed in the window (2)-1 illustrated in Figure 10(b).

Figure 11 is a view showing the screen variation in case of selecting an anchor that does not indicate the target window. Figure 11(a) shows the close-up screen of the document A-2-1 and the window (2)-1, containing an anchor 42 that has contents of <A href="http://www.yahoo.com"/> Goto Yahoo</A>, with no target window designated. Accordingly, if the anchor 42 is selected, the document of the anchor 42, i.e., document of yahoo.com is magnified and displayed in the current window, i.e., in the window (2)-1 illustrated in Figure 11(b).

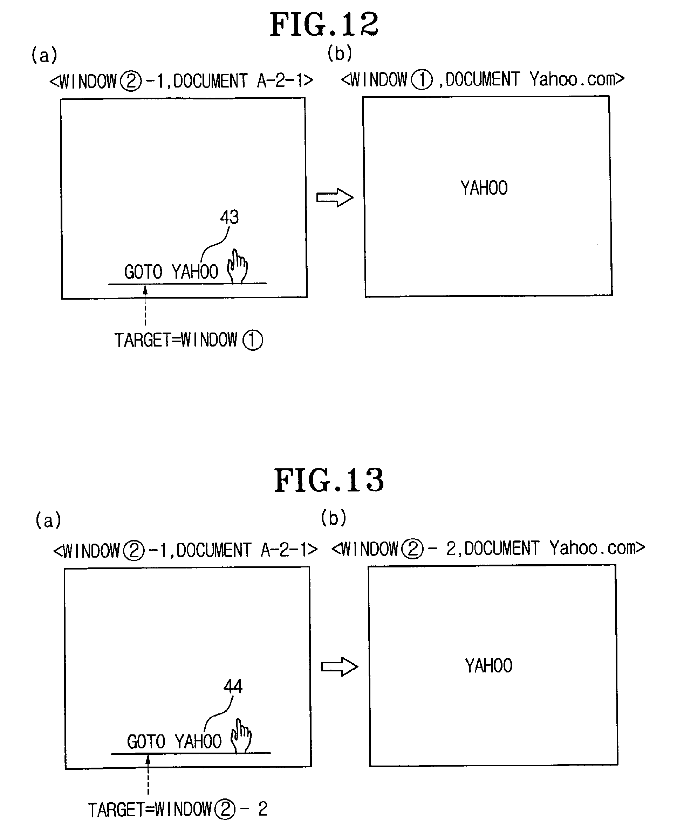

Figures 12 and 13 illustrate when the window being currently displayed in close-up is not the target window of the anchor, and the target window has no screen variation corresponding to steps S226-S230. Figure 12(a) shows the close-up screen of the document A-2-1 and the window (2), containing an anchor 43 having the contents of <A target="window (1)" href="http://www.yahoo.com"/> Goto Yahoo</A>, with the target window being the window (1). Accordingly, if the anchor 43 is selected, the close-up of the document currently displayed in the screen is cancelled, and the close-up of the document of the anchor 43 (i.e., the document of yahoo.com), is displayed on the window (1), as illustrated in Figure 12(b).

Figure 13(a) shows the close-up screen of the document A-2-1 and the window (2)-1, containing an anchor 44 having the contents of <A target= "window (2)-2" href="http://www.yahoo.com"/> Goto Yahoo</A>, with the target window being the window (2)-2. Accordingly, if the anchor 44 is selected, the close-up of the document currently displayed in the screen is cancelled, and the close-up of the document of yahoo.com is displayed on the window (2)-2.

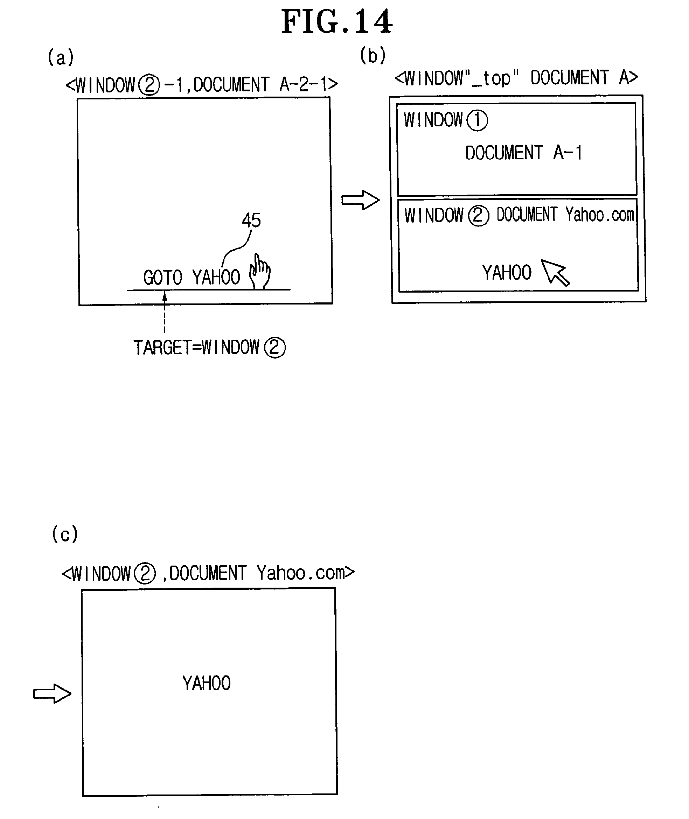

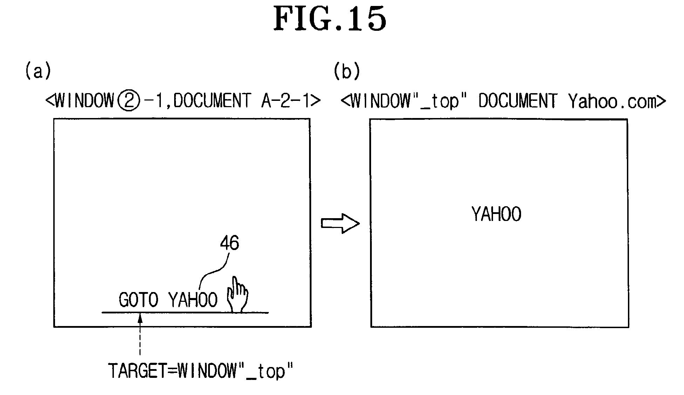

The case when the target window of the anchor has the different structure will be described with reference to Figures 14 and 15, corresponding to steps S218-S224. Figure 14(a) shows the close-up screen of the document A-2-1 and window (2)-1, containing an anchor 45 having the contents of <A target= "window (2)" href="http://www.yahoo.com"/> Goto Yahoo</A>, with the target window being the parent window (2) of the window (2)-1 currently displayed in close-up. Accordingly, if the anchor 45 is selected, all the windows and documents under the parent window (2), inclusive of the window (2)-1 currently displayed in close-up, are cancelled, and the screen is returned to the initial screen shown in Figure 5. Then the document of the anchor 45 (i.e., the document of yahoo.com), is displayed in the window (2).

Since the screen displayed in Figure 14(b) is comprised of a plurality of frames having the windows (1) and (2), when the document of yahoo.com is selected, the close-up of the document of yahoo.com is displayed, as illustrated in Figure 14(c).

Figure 15(a) shows the close-up screen of the document A-2-1 and the window (2)-1, containing an anchor 46 having the contents of <A target= "_top" href= "http://www.yahoo.com"/ > Goto Yahoo </A>, with the target window being the root window (_top). Accordingly, if the anchor 46 is selected, the windows and the documents generated under the root window (_top) disappear, and the document of the yahoo.com is displayed in the root window (_top). In that case, all the windows and the documents generated under the root window (_top) disappear. Accordingly, when there is variation in the document structure, the document is displayed in the target window without close-up.

The preferred embodiments of the present invention are applicable to the programs executed on the computers. That is, the steps of the method used in accordance with the present invention can be stored in a recording medium readable by the computer. The recording medium may be a magnetic storage medium (e.g., floppy disk, hard disk, etc.), optical reading medium (e.g. CD-ROM, DVD, etc.), and a carrier wave (e.g., transmission via the Internet), but is not limited thereto.

According to the above-described embodiments, when the close-up of a particular document is displayed and there is variation in the structure of the document of the target window of the anchor, the document is displayed in the target window without close-up. However, the document may also be displayed in the close-up of the target window when there is the variation in a structure of the document.

Alternatively, when there is a variation in the structure of the document of the anchor, the user may select whether to display the document in the target window with or without the close-up.

The present invention has various advantages. As described above, according to the information communicating apparatus having the close-up function of web document, the close-up method thereof, and the recording medium storing the close-up method in accordance with the present invention, the user can view the document of a particular intended frame of the web document having the plurality of frames as he/she likes.

Accordingly, the complexity and the readability of the document are improved since only a particular document is displayed on the screen.

Further the user can obtain his/her desired information from the web documents more easily. Also, when the window includes frames, by extending the display area of the document, the readability of the document is improved, and the user has a convenience in handling the document.

Although the preferred embodiment of the present invention has been described, it will be understood by those skilled in the art that the present invention should not be limited to the described preferred embodiment, but various changes and modifications can be made within the scope of the present invention as defined by the appended claims.

The reader's attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings), may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extend to any novel one, or any novel combination, of the features disclosed in this specification (including any accompanying claims, abstract and drawings), or to any novel one, or any novel combination, of the steps of any method or process so disclosed.

## Claims

1. An information communicating system coupleable to a web server via a network, comprising:
an information communicating apparatus (30) arranged to download a web document from a web server (50), wherein when the web document has a frame structure and when a frame (12,14) is selected from the frame structure, the information communicating apparatus displays a close-up of the selected frame (14).

2. The information communicating system of claim 1, wherein the information communicating apparatus comprises:
a display portion (34) that displays the web document;
an input portion (32) that receives a request for a close-up on a particular frame (14) when the web document comprises a plurality of frames (12,14); and
a web browser (36) that provides a close-up screen of the particular frame (14) and displays the close-up screen in the display portion (34).

3. The information communicating system of claim 2, wherein the web browser (36) provides a plurality of menus that process the web document, and the web browser (36) provides a close-up of the downloaded web document when a selection of the menus for a close-up of the web document is received at the input portion.

4. The information communicating system of claim 2 or 3, wherein the web browser (36) includes a voice recognition function, and provides a close-up of the downloaded document in accordance with a voice command requesting the close-up of the web document is received at the input portion (32).

5. The information communicating system of claim 2, wherein the web browser (36) provides a close-up of the downloaded web document when a selection is made through at least one particular key of the input portion (32).

6. A method for displaying a web document using an information communicating apparatus having a web browser, the method comprising the steps of:
A) displaying a web document in an initial window that is generated when the web browser (36) is driven; and
B) when the web document is comprised of a plurality of frames (12,14) of windows and documents and when a signal for a close-up of a document of a frame is selected, displaying the selected document (14) in close-up.

7. The method of claim 6, further comprising the steps of:
i) when the close-up document comprises a plurality of sub-frames (12,14) having windows and documents, selecting a signal for a close-up of a particular document from a plurality of documents of the sub-frames; and
ii) displaying the selected particular document in close-up.

8. The method of claim 6 or 7, wherein, when the web document includes a plurality of first sub frames that have a plurality of second sub-frames, and when a signal for close-up of a particular document of documents of the second sub-frames is selected, the step B) displays the selected particular document in close-up.

9. The method of claim 6, wherein the step B) comprises the steps of:
b1) when the close-up document is displayed containing an anchor that designates a particular document and a particular window, selecting the anchor; and
b2) displaying the particular document designated by the anchor according to a characteristic of the anchor.

10. The method of claim 9, wherein the step b2) displays the designated document while maintaining the close-up.

11. The method of claim 9, wherein the step b2) displays the designated document in the window designated by the anchor, while maintaining the close-up.

12. The method of claim 9, wherein the step b2) displays the designated document in the window designated by the anchor, while cancelling the close-up.

13. A recording medium that stores a program configured to perform a close-up of a web document, and that uses an information communicating apparatus having a web browser, the stored program performing the steps of:
displaying a web document in an initial window that is generated when the web browser is driven; and
when the web document is comprised of a plurality of frames (12,14), and a signal for a close-up of the web document for one of the frames (14) is selected, displaying the selected frame in close-up.
